# EUROPEAN PATENT SPECIFICATION

(11) **EP 3 333 568 B1**
(45) Date of publication and mention of the grant of the patent: **24.06.2020**
(21) Application number: 16203104.1
(22) Date of filing: 09.12.2016
(51) Int. Cl.: G01N 21/64, G01K 11/20, G01N 31/22, G01N 21/77, G01N 21/85

(54) **OPTOCHEMICAL SENSOR**
OPTOCHEMISCHER SENSOR
CAPTEUR OPTOCHIMIQUE

(43) Date of publication of application: 13.06.2018
(73) Proprietor: Mettler-Toledo GmbH, 8606 Greifensee (CH)
(72) Inventor: Fischer, Milan, 3097 Liebefeld (CH); Ulmer, Lilya, 8932 Mettmenstetten (CH); Venturini, Francesca, 8606 Dübendorf (CH)
(74) Representative: Mettler-Toledo

(56) References cited:
- EP-A1- 2 573 548
- US-A1- 2010 203 649
- US-A1- 2016 091 432
- US-B1- 6 602 716
- US-B2- 6 303 386
- MOORE J P ET AL: "Exploiting cross sensitivity: achieving integrated temperature compensation via a dual-element optical oxygen sensor", SPIE - INTERNATIONAL SOCIETY FOR OPTICAL ENGINEERING. PROCEEDINGS, vol. 6377, 17 October 2006 (2006-10-17), page 63770I, XP055365519, US ISSN: 0277-786X, DOI: 10.1117/12.718682 ISBN: 978-1-5106-0753-8
- BORISOV S M ET AL: "A novel planar optical sensor for simultaneous monitoring of oxygen, carbon dioxide, pH and temperature", ANALYTICAL AND BIOANALYTICAL CHEMISTRY, SPRINGER, BERLIN, DE, vol. 400, no. 8, 9 January 2011 (2011-01-09), pages 2463-2474, XP019907562, ISSN: 1618-2650, DOI: 10.1007/S00216-010-4617-4
- BALEIZÃO C ET AL: "Dual Fluorescence Sensor for Trace Oxygen and Temperature with Unmatched Range and Sensitivity", ANALYTICAL CHEMISTRY, vol. 80, no. 16, 2008, pages 6449-6457, XP055061868, ISSN: 0003-2700, DOI: 10.1021/ac801034p

## Description

The invention relates to an improved optochemical sensor for the determination of at least two parameters in a measurement medium.

Optochemical sensors find application for the determination of a wide variety of analytes such as dissolved gases, metal ions etc. in environmental, industrial, laboratory, medical and biological applications.

In principle, the operation of an optochemical sensor relies on an optical-sensing technique, such as photoluminescence. The phenomenon of photoluminescence involves absorption of photons followed by subsequent emission of light. An optochemical sensor based on this operating principle comprises a signaling substance, commonly referred to as an indicator that is capable of interacting with the analyte to be measured in the process medium. The indicator can either be in direct or indirect contact with the process medium.

In optochemical sensors based on photoluminescence, a reduction of photoluminescence caused by the analyte is detected, known as photoluminescence quenching. Under this principle, the molecules of an indicator are excited by irradiation with light of a suitable wavelength. As the molecules relax from the excited state back to the ground state, they release the absorbed energy again in the form of photoluminescence. Physical interaction between the analyte and the indicator causes enhanced relaxation via a non-radiative channel, which leads to decrease of the photoluminescence intensity and increase of the relaxation rate-quenching. Depending on the indicators direct emission is not possible and the system relaxes through an additional state with greatly reduced transition rate.

The principle of photoluminescence covers in particular two phenomena, namely fluorescence and phosphorescence, which differ in their photophysical process that occurs in the molecule during excitation and emission. Indicators that are used in an optochemical sensor based on either the fluorescence or the phosphorescence phenomenon are better known as fluorophors or phosphorescent indicators respectively.

In principle, it is possible to determine many analytes such as H⁺, dissolved gases, such as carbon dioxide, oxygen also ozone, etc., in a process medium by photoluminescence and photoluminescence quenching, as long as the signal substance, for example an indicator, is sensitive in regard to the parameter of interest in the process medium. The term "process medium" in this context encompasses liquids and gases as well as mixtures thereof.

European patent application EP 2 573 548 A1 describes an optochemical sensor for measuring at least one chemical or physical parameter in a measurement medium, comprising a sensor housing with a measurement arrangement, a measuring element, and a covering cap that seals the measurement arrangement against the medium. The cap comprises a window, on which the the measuring element is arranged at a medium-side.

U.S. Pat. Application 2010/0203649 A1 describes an optochemical sensor element used in an optochemical measuring device. It comprises an indicator immobilized in a polymer matrix that is applied on a substrate. The optochemical sensor element is used for the measurement of gaseous or dissolved analytes, such as oxygen, sulfur dioxide, hydrogen peroxide or nitric oxide. The optochemical sensor is said to have high stability, good optical transparency and good resistance to mechanical stress and ensures fast measurement of gaseous or dissolved parameter in precise manner.

As previously known, most optical indicators are cross-sensitive to temperature, since both photoluminescence and quenching phenomena are temperature dependent. In applications concerning use of such optochemical sensors to determine a certain parameter, the concentration determination of the analyte is often corrected for temperature. What can be intriguing about temperature compensations is a false temperature measurement because this would translate directly in measurement errors which could affect the measurement medium and therefore a process under observation. This is of special concern in gas applications where the temperature of the process medium can change by more than several tenths of degrees within several seconds thereby calling for a quick temperature measurement.

Baleizao et al. (Anal. Chem. 80, 6449-6457, 2008) describe a dual fluorescence sensor that takes into account the effect of temperature on the oxygen sensor. Two sensor layers containing two luminescent compounds for oxygen and temperature respectively were prepared over a polyester support. Both sensor layers were arranged on the same side of the polyester support.

S. M. Borisov, et al. (Anal. Bioanal. Chem. 400, 2463-2474, 2011) discloses a multi analyte sensor arrangement to detect three chemical parameters and temperature comprising a Mylar support on which a pH/temperature layer, a separating silicone layer and a CO2/O2 layer are arranged on top of each other.

In U.S. Pat. No. 6,303,386 an optochemical sensor is disclosed for the determination of temperature-compensated chemical parameters in a measurement medium. A temperature sensor is combined with a chemical sensor which contains an optical-chemical indicator which is primarily directed towards effecting temperature compensation by measuring the temperature directly in the sensitive layer of the sensor. In an embodiment described in this document, the temperature indicator and chemical indicator are immobilized in two different layers. The two layers are applied on a substrate which is then introduced into the measuring medium bringing the two sensor layers in direct contact with the medium.

J. P. Moore, et al. (Proc. of SPIE, Vol 6377, 637701-1 to 637701-11, 2006) disclose a sensor with two oxygen sensitive layers on opposite sides of a support membrane, wherein the sensitive layers comprise the same fluorophore with different sensitivities. Both layers are exposed to the measurement medium. A temperature compensation can be achieved by numerically analysis of the measured phases of the two oxygen sensitive layers.

US 6,602,716 B1 discloses a sensor and process to comprising a two indicators, only one of which is sensitive to a parameter to be measured. In one embodiment these two indicators are arranged in two layers applied to opposite sides of a substrate. The two indicators exhibit different decay times. The indicator with the longer decay time, is considered to be insensitive to the parameter to be measured. The time- or phase behavior of the resulting luminescence response is used to form a reference value for determination of the parameter.

This document also describes that the temperature indicator and the chemical parameter indicator may be combined into one sensor layer by immobilizing them in the same solid matrix. However, this step requires the temperature indicator to be inert towards the measuring medium. Moreover, the choice of the matrix is strongly reduced because both indicators need to be solvable in it.

In order to account for quick temperature changes in the measurement medium, a temperature sensitive indicator requires a short response time. Common reasons for long response times or slower responses of a temperature sensitive indicator towards the temperature of the measurement medium are attributed to the physical separation of the resistive thermoelement that is built into a detachable or fixed sensor tip. One attempt to overcome this is to integrate the thermoelement directly into the sensor tip. However, this in turn necessitates a good and reliable electrical connection which can become a major challenge.

Moreover in an optochemical sensor, individual sensing layers for different parameters contribute to an increased thickness owing to a stack arrangement of sensing layers thereby leading to slower response times of the optochemical sensor. Such an arrangement also necessitates that each sensing layer be mechanically and chemically compatible with each other.

Therefore, there exists a need for an improved optochemical sensor that is capable of temperature corrected parameter measurement (or dual measurement) in a measurement medium with comparable response times of the temperature and parameter measurement.

There is provided an optochemical sensor for determining at least two parameters, one of which is temperature, in a measurement medium according to claim 1.

The sensor comprises a sensor housing comprising at least one light source and at least one detection unit and with an optochemical sensitive element arranged in a light path between the light source and detection unit, wherein the optochemical sensitive element is releasably housed or attached to the sensor housing; said optochemical sensitive element comprising a substrate with a first surface and a second surface; at least a first sensing layer arranged on the first surface of the substrate and at least a second sensing layer arranged on the second surface of the substrate. The first sensing layer comprises a first photoluminescent indicator immobilized in a first polymer matrix to determine a first parameter in the measurement medium and the second sensing layer comprises a temperature sensitive photoluminescent indicator immobilized in a second polymer matrix to determine the temperature of the measurement medium
wherein the substrate is optically transparent to excitation light emitted from the light source and to photoluminescent light emitted from the first indicator,
and wherein
the first surface comprising the first sensing layer is facing the medium and is opposite to the second surface comprising the second sensing layer and facing away from the measurement medium; and wherein the first indicator differs from the temperature sensitive indicator. The arrangement of the first sensing layer and the second sensing layer is such that the substrate is arranged between these two sensing layers.

The above mentioned optochemical sensitive element is advantageous because the first sensing layer and the second sensing layer are physically separated from each other by means of the substrate.

The arrangement of a physical separation between the two sensing layers offers an advantage to have different indicators within the optochemical sensitive element with different response times. This further allows the preparation of two thinner sensitive layers which results in shorter response times.

The first sensing layer comprises the first indicator immobilized in the first polymer matrix. The term "indicator" refers to a phosphorescent indicator or a fluorophor, and herein, will be referred to as indicator in this invention. The first sensing layer determines the first parameter of an analyte in the measurement medium, such as a dissolved analyte, preferably dissolved oxygen. The term "analyte" denotes a substance whose property, such as concentration in the measurement medium, is being measured. The term "parameter" denotes a measured amount of the analyte in the measurement medium, such as concentration, temperature or partial pressure of the analyte in the medium and herein, will be referred to as parameter in this invention.

In exemplary embodiments, the first sensing layer is configured to determine a dissolved gas that can be any of the following: oxygen, carbon dioxide or ozone. The second sensing layer is configured to determine the temperature of the measurement medium.

The choice of the indicators for each of the sensing layers of the optochemical sensitive element depends on at least two aspects. In one aspect, the choice is dependent on the parameter that is to be measured. Suitable indicators are chosen on the basis of their long photoluminescence lifetime and those whose photoluminescence is capable of exhibiting a strong dependency on the parameter to be measured. Consequently, the choice of the indicator suited for the measurement of dissolved gases, in particular for oxygen is from any of the following: metal-organic complexes comprising a polycyclic aromatic hydrocarbon, such as pyrene and/or its derivatives, oxygen sensitive transitional metal polypyridil complex, in particular [Ru(bpy)₃]₂⁺, or a metalloporphyrin complex comprising in particular platinum or palladium.

An indicator suited for the measurement of carbon dioxide as dissolved gas, is for example 8-hydroxypyrene-1,3,6-trisulfonic acid.

Examples of temperature sensitive indicator suited for the measurement of the temperature of the measurement medium include any of the following: rhodamine complex and/or its derivatives, metal ligand complex, in particular [Ru(bpy)₃]²⁺, lanthanide-doped bulk material, in particular doped Al₂O₃, or YAB doped with chromium ions. The above mentioned indicators are commercially available. Additionally, numerous suitable indicators other than the ones mentioned above are commercially available and can be used as a suitable indicator in an optochemical sensor to determine at least one parameter in a measurement medium.

Additionally, the choice of the indicator also depends on its solubility in the polymer matrix.

The following polymers are used as polymer matrices in the first and the second sensing layers in the optochemical sensitive element: polystyrene film, cyclic olefin copolymer such as ethylene-norbornene copolymer, cyclic olefin polymer ("COP") and poly(n-methyl methacrylimide) (PMMI) as well as a combination thereof.

In an embodiment of the optochemical sensitive element, the first polymer matrix is different in composition from the second polymer matrix.

Using the polymer matrix to immobilize the indicator offers the advantage of providing high mechanical strength thereby bringing stability to the optochemical sensitive element structure. Further, the polymer matrices are also very stable in withstanding acidic and basic cleaning processes, which results in a longer service life of the optochemical sensitive element.

Also, immobilizing two or more different indicators on one polymer matrix is disadvantageous because the choice of a polymer matrix is greatly reduced. This is because all the chosen indicators need to be solvable in that selected polymer matrix. Therefore, using different polymer matrices to immobilize different indicators respectively offers an added advantage.

The thickness of the optochemical sensitive element is about 150 to 1600 µm, preferably in the range of 500 to 1200 µm. The thickness of the first sensing layer is preferably in the range of 1 to 10 µm. The thickness of the second sensing layer is preferably in the range of 10 to 100 µm. The substrate has a thickness of about 200 to 1500 µm preferably in the range of 400 to 1100 µm.

In an embodiment, the first sensing layer of the optochemical sensitive element further comprises a second indicator along with the first indicator. The first indicator is configured to determine the first parameter that being the concentration of a first analyte such as a first dissolved gas. The second indicator is configured to determine a second parameter in the measurement medium, such as the concentration of a second analyte in the measurement medium or the pH value. The second analyte in the measurement medium can be a second dissolved gas, such as carbon dioxide or ozone.

The above mentioned optochemical sensitive element is advantageous as it allows the determination of multiple parameters with a single sensitive element thus making it economically advantageous when used in a multifunctional optochemical sensor.

The substrate used in the optochemical sensitive element comprises a material selected from the group consisting of glass, polyester, amorphous or partially crystalline polyamide, acrylate, polycarbonate, ethylene-norbornene copolymer (cyclic olefin copolymer). Furthermore, the substrate can also be prepared from a combination of these materials.

In a further embodiment of the optochemical sensitive element, the first sensing layer comprising the first indicator is configured to cover the first surface of a substrate. The second sensing layer comprising the second indicator is configured to cover at least a portion of the second surface of the substrate.

In a further embodiment, the second sensing layer is arranged to cover at least half of the second surface of the substrate. In this arrangement, emitted photoluminescence from the first indicator is collected via a first light path and photoluminescence from the first and second indicator is collected via a second light path. The first and second light path are spatially separated from each other, so that photoluminescence from the first indicator is collected from the half portion of the sensitive element comprising only the first indicator, respectively where the second sensing layer is absent. Likewise, the combined photoluminescence signal from the first and second indicator is collected from the half covered portion of the substrate by the second sensing layer. The signals from the first and second indicator can be separated using their spectral peaks and decay time. The first and/or second light path can further comprise a first and/or second optical fiber for collecting the respective photoluminescence.

In a further embodiment, the second sensing layer is arranged over the second surface of the substrate either in the shape of a disc or in that of an annular ring. In yet a further embodiment, the second sensing layer is disposed over the second surface of the substrate in the shape of a concentric area, which is concentric with the substrate and the first sensing layer.

Optochemical sensitive elements with first and second sensing layers wherein one sensitive layer partially covers the substrate are particularly advantageous because an increased amount of emitted photoluminescence from the first sensing layer can be measured because the influence of the second sensing layer on the photoluminescence can be eliminated or at least reduced. Additionally, the possibility of exciting and/or collecting photoluminescence of only one of the indicators leads to high photoluminescence yields and faster response times.

The invention relates to an optochemical sensor comprising an optochemical sensitive element to determine at least two parameters in a measurement medium. The first parameter is a dissolved gas and the second parameter is the temperature of the measurement medium. The optochemical sensor further comprises a sensor housing comprising: at least one light source, at least one detection unit and a light path between the light source and the detection unit; wherein the optochemical sensitive element is configured to be arranged in the light path between the light source and the detection unit.

The optochemical sensitive element comprising the substrate and the two sensing layers is arranged within the optochemical sensor such that the first sensing layer is arranged to be in contact with the measurement medium whereas the second sensing layer is arranged to face away from the measurement medium. This arrangement allows the second sensing layer comprising the temperature sensitive indicator to be closer to a detection unit as compared to the first sensing layer. Furthermore, this arrangement also shields the temperature sensitive indicator from the measurement medium. Additionally, this configuration reduces cross sensitivity of temperature to the analyte in the measurement medium.

The response time of the sensing layer is determined by the diffusion rate of the analyte molecules through the sensing layer which determines how quickly the sensor reacts on the change in the value of a parameter of the analyte in the measurement medium. Thinner sensitive layers are advantageous as they lead to shorter response times.

There is also provided a method of using an optochemical sensitive element for determining at least two parameters, one of which is temperature, in a measurement medium, according to claim 13. The optochemical sensitive element used therein is produced comprising the steps of providing an optically transparent substrate having a first surface and a second surface. Further, the method involves applying a first sensitive layer on the first surface of the substrate using a first application technique wherein the first sensing layer comprises a first photoluminescent indicator immobilized in a first polymer matrix to determine a first parameter in the measurement medium. The method further comprises the step of applying a second sensing layer on the second surface of the substrate using a second application technique wherein the second sensing layer comprises a temperature sensitive photoluminescent indicator immobilized in a second polymer matrix to determine temperature of the measurement medium. The optochemical sensitive element is prepared according to above mentioned steps such that the first sensing layer applied to the first surface of the substrate is configured to be facing the measuring medium and to be opposite to the second sensing layer applied to the second surface of the substrate; wherein the first indicator differs from the temperature sensitive indicator.

The application of each sensing layer, namely the first sensing layer and the second sensing layer, as described in the above mentioned method are preferably carried out by different application techniques such as dip-coating, spin-coating, blade coating or screen printing.

This is particularly advantageous when the first and second sensing layer are applied on respective opposite surfaces of the substrate because each sensing layer comprising respective indicators can be applied to each corresponding surface independent of the application technique of the other sensing layer. Therefore, this arrangement allows the sensing layer to be applied to the surface of the substrate by an application technique that is suitable to the sensing layer. Thereby, this method consequently provides an ease in manufacturing of the optochemical sensitive element. This in turn becomes economically advantageous as well. A further advantage of this arrangement is that it eliminates the requirement that the sensing layers comprising respective indicators immobilized on respective polymer matrices need to be mechanically and chemically compatible with each other when applied on the same side of the substrate.

Other features and advantages disclosed herein will become more apparent from the following detailed description of exemplary embodiments when read in conjunction with the following figures. The figures show:
- Fig. 1: schematic of an optochemical sensor;
- Fig. 2: a longitudinal cross sectional view of an optochemical sensitive element housed within an optochemical sensor immersed in a measurement medium;
- Fig. 3: a schematic cross sectional view of an embodiment of an optochemical sensitive element for measuring the temperature and two other parameters in a measurement medium;
- Fig. 4: a schematic cross sectional view of another embodiment of an optochemical sensitive element for measuring the temperature and three other parameters in a measurement medium;
- Figs. 5A: a schematic cross sectional view of an embodiment showing an arrangement of a second sensing layer of an optochemical sensitive element;
- Figs. 5B: a schematic top view of embodiment shown in Fig. 5a showing the arrangement of the second sensing layer of the optochemical sensitive element;
- Figs. 6A: a schematic cross sectional view of an embodiment showing an arrangement of a second sensing layer of an optochemical sensitive element;
- Figs. 6B: a schematic top view of embodiment shown in Fig. 6a showing the arrangement of the second sensing layer of the optochemical sensitive element;
- Figs. 7A: a schematic cross sectional view of an embodiment showing an arrangement of a second sensing layer of an optochemical sensitive element;
- Figs. 7B: a schematic top view of embodiment shown in Fig. 7a showing the arrangement of the second sensing layer of the optochemical sensitive element;
- Fig. 8: a schematic cross sectional view of an embodiment of an optochemical sensitive element comprising various layers;

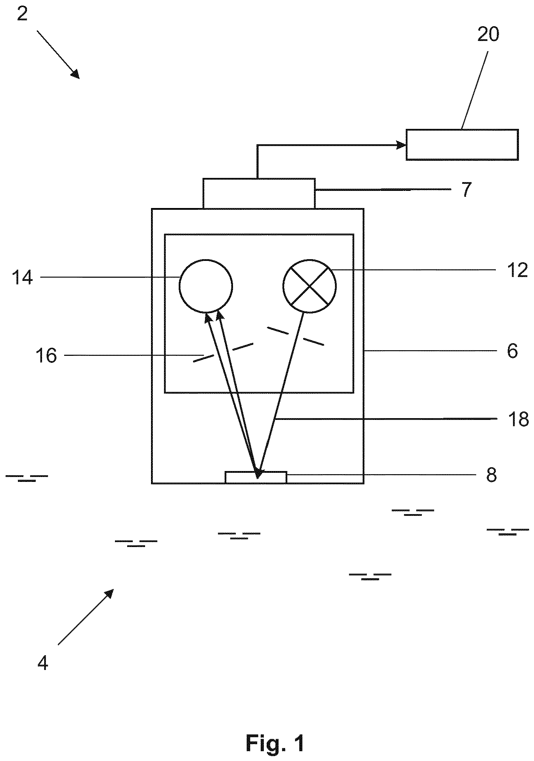

Fig. 1 shows a schematic cross sectional view of an optochemical sensor **2** immersed in a measurement medium **4.** The optochemical sensor **2** has two ends, a distal end that is immersed in the measurement medium **4** and a proximal end having a sensor head **7,** which is connected via a wire or wireless connection to a control unit **20.** An optochemical sensitive element **8** is arranged at the distal end of the optochemical sensor **2** that is immersed in the measurement medium **4.**

Further, the optochemical sensor **2** comprises a light source **12,** a detection unit **14** and optical elements **16** housed within a sensor housing **6.** Further, the optochemical sensor can comprise more than one light source and/or more than one detector respectively within the sensor housing **6.**

During measurement operation of the optochemical sensor **2** based on the principle of photoluminescence, excitation light is emitted by the light source **12** and is directed by optical elements **16,** such as filters, mirrors or lenses, towards the optochemical sensitive element **8** such that the emitted light interacts with the optochemical sensitive element **8.** A light path is indicated by arrows **18.** The optochemical sensitive element **8** is arranged in the light path **18** between the light source **12** and detection unit **14,** as seen in Fig. 1. A photoluminescence response signal, in particular a fluorescence or phosphorescence response signal that is emitted after excitation interacts with the optochemical sensitive element **8** and is detected by the detection unit **14.** As previously described, in optochemical sensors based on photoluminescence a reduction in the photoluminescence caused by an analyte in the measurement medium is detected. The detection unit **14** comprises at least one detector, for example a photodiode. Depending on the number of parameters in the measurement medium to be measured, the detection unit **14** can further comprise corresponding detectors for one or more of the parameters. The detection unit **14** further comprises optical filters that are positioned in front of the detectors. These optical filters help in separating signals that are received from the optochemical sensitive element **8.** The sensor further comprises optical fibers to direct the light to and/or emit the light from the optochemical sensitive element **8.**

The response signal received by the detection unit **14** is amplified and processed by the control unit **20.** The control unit **20** is connected via a wired or wireless connection to the sensor head **7** and it can also function as a regulation unit. The control unit **20** can further be connected to a terminal which in turn can be connected to a display, a process control system, a transmitter or a further processing unit and/or similar devices. The control unit **20** is arranged either as an external unit or also entirely or in part inside the sensor housing **6.** In this embodiment, the control unit **20** has a wire-bound or wireless connection to the sensor head **7** of the optochemical sensor **2.** The state of the art includes different variants of the control unit **20** and the latter is therefore only symbolically illustrated. The optochemical sensitive element **8** is releasably connected to the sensor housing **6** so that the optochemical sensitive element **8** can be easily replaced.

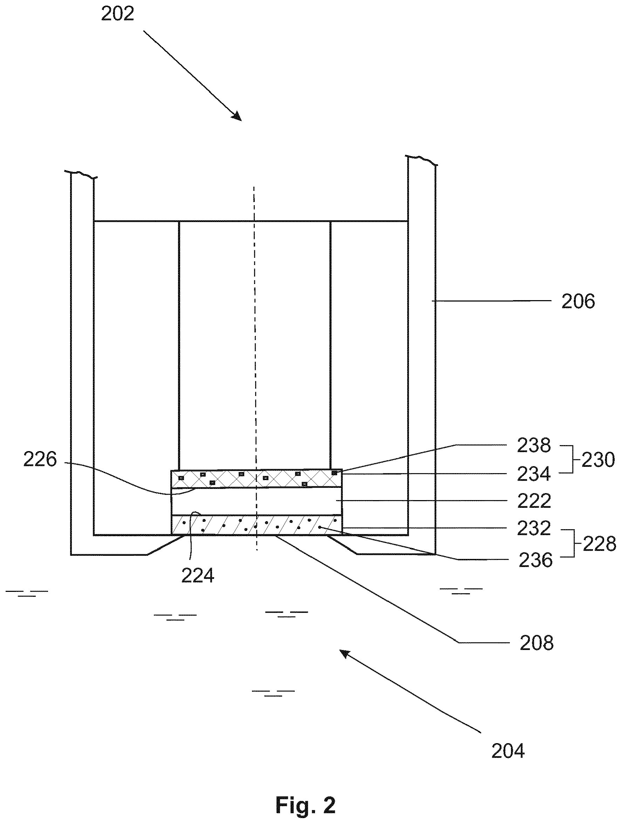

Fig. 2 shows a longitudinal cross sectional view of an optochemical sensitive element **208** housed within an optochemical sensor **202.** The optochemical sensitive element **208** is shown to be arranged at a distal end of an optochemical sensor **202** that is immersed in a measurement medium **204.** The optochemical sensitive element **208** comprises at least two sensing layers i.e. a first sensing layer **228** and a second sensing layer **230** arranged on a substrate **222.** The first sensing layer **228** is arranged on a first surface **224** of the substrate **222.** The second sensing layer **230** is arranged on a second surface **226** of the substrate **222.** The substrate **222** is arranged within a sensor housing **206** such that first surface **224** of the substrate **222** is arranged to face towards the measurement medium **204** while the second surface **226** of the substrate **222** is arranged to face away from the measurement medium **204.**

Example shapes or geometries of substrates include but are not limited to rectangular, hexagonal, circular, triangular, square-formed or polygonal substrates. The substrate **222** is optically transparent to an excitation light emitted from a light source (see Fig. 1). Preferably, the substrate **222** is made of glass. It can also be made from any of the following materials: polyester, amorphous or partially crystalline polyamide, acrylate, polycarbonate, ethylene-norbornene copolymer (cyclic olefin copolymer) or combinations of these materials thereby being a hybrid substrate.

The first sensing layer **228** arranged on the first surface **224** of the substrate **222** determines a first parameter in the measurement medium **204.** The second sensing layer **230** arranged on the second surface **226** of the substrate **222** determines the temperature of the measurement medium **204.**

In a preferred embodiment, the first sensing layer **228** is configured to determine the first parameter, such as the concentration of a dissolved gas, in the measurement medium **204.** The first sensing layer **228** comprises a first indicator **236** immobilized in a first polymer matrix **232.** The second sensing layer **230** comprises a temperature sensitive indicator **238** immobilized in a second polymer matrix **234.**

Examples of polymers that can be used to form optically transparent polymer matrices of the respective sensing layers are: polystyrene film, cyclic olefin copolymers such as ethylene-norbornene copolymer, cyclic olefin polymer ("COP") and poly(n-methyl methacrylimide) (PMMI) or mixtures thereof. Alternatively, the second sensing layer can employ silicone polymers for its polymer matrix composition. Moreover to better suit each indicator, the first polymer matrix **232** and second polymer matrix **234** can be made from different polymers. Further, it is also possible that the indicators are immobilized in the same polymer matrix material.

Polymer matrices provide a considerable amount of good mechanical stability and thus immobilizing indicators in them becomes advantageous. Additionally, these matrices are also known to withstand the acidic and/or basic cleaning processes, which are, for example used in chemical process environments, and this in turn provides an optochemical sensitive element with a longer service life.

A suitable indicator to detect an analyte of interest in a measurement medium is selected based on the basis of the type of analyte to be determined, its solubility in a polymer matrix as well as its photoluminescence lifetimes and the dependency of the photoluminescence quenching from the parameter being measured.

In an exemplary embodiment where the optochemical sensitive element **208** is used to determine the temperature-compensated oxygen concentration in the measurement medium **204,** a suitable indicator is chosen for the measurement of oxygen concentration in the measurement medium. Subsequently, the second sensing layer **230** takes into account temperature changes in the measurement medium **204** during said measurement of the said first parameter by compensating for temperature changes thereby providing the temperature compensated measurement of the oxygen concentration in the measurement medium **204.**

Examples of suitable indicators for the measurement of oxygen are metal-organic complexes comprising polycyclic aromatic hydrocarbons such as pyrene and/or pyrene derivatives, oxygen sensitive transitional metal polypyridil complex, in particular [Ru(bpy)₃]²⁺ or metalloporphyrin complex comprising in particular platinum or palladium. Additionally, there are numerous commercially available indicators that may be used in the measurement of oxygen.

In a further exemplary embodiment, the optochemical sensitive element **208** is configured for determining the first parameter, in particular the concentration of a dissolved gas, such as carbon dioxide or ozone, in the measurement medium **204.** The measurement of this parameter is temperature compensated by correspondingly measuring the temperature of the measurement medium **204** utilizing the temperature sensitive indicator **238** of the second sensing layer **230.** A suitable indicator for the measurement of dissolved carbon dioxide is 8-hydroxypyrene-1,3,6-trisulfonic acid.

Providing a temperature sensitive indicator **238** in the second sensing layer **230** facing away from the measurement medium **204** offers an advantage that it allows the temperature sensitive indicator to be protected from the measurement medium, specifically as protection from corrosive measurement media.

Preferably, the temperature sensitive indicator is chosen from any of rhodamine complex or its derivatives, metal ligand complex, in particular [Ru(bpy)₃]²⁺ or lanthanide-doped bulk material, in particular doped Al₂O₃ or YAB doped with chromium ions.

Known temperature sensitive indicators are less efficient photoluminescent emitters compared to indicators sensitive for dissolved gases, such as oxygen, carbon dioxide or ozone. Therefore, this is compensated by separating the temperature sensing layer **230** comprising the temperature sensitive indicator **238** from the at least first sensing layer **228** comprising the at least first indicator **236** and thus bringing it closer to the optical detection unit (see Fig 1) in the sensor housing **206** of the optochemical sensor **202.** This arrangement also allows the temperature sensing layer **230** to be disposed as a thin layer on the substrate **222** thereby leading to a faster response time of the optochemical sensitive element **208.**

The excitation range for exciting the first sensing layer **228** comprising the first indicator **236,** preferably adapted of an optochemical sensor for measuring dissolved oxygen, lies preferably in the range of 390 to 570 nm. The excitation range for exciting the second sensing layer **230** comprising the temperature sensitive indicator **238** lies preferably in the range of 390 to 670 nm. The excitation ranges are chosen based on spectral range or the photoluminescence answer from the respective indicator and/or sensing layer.

The light detection range for the first indicator 236, in particular the oxygen sensitive indicator, lies in the range of 600 to 870 nm whereas that for the temperature sensitive indicator 238 lies in the range of 630 to 800 nm.

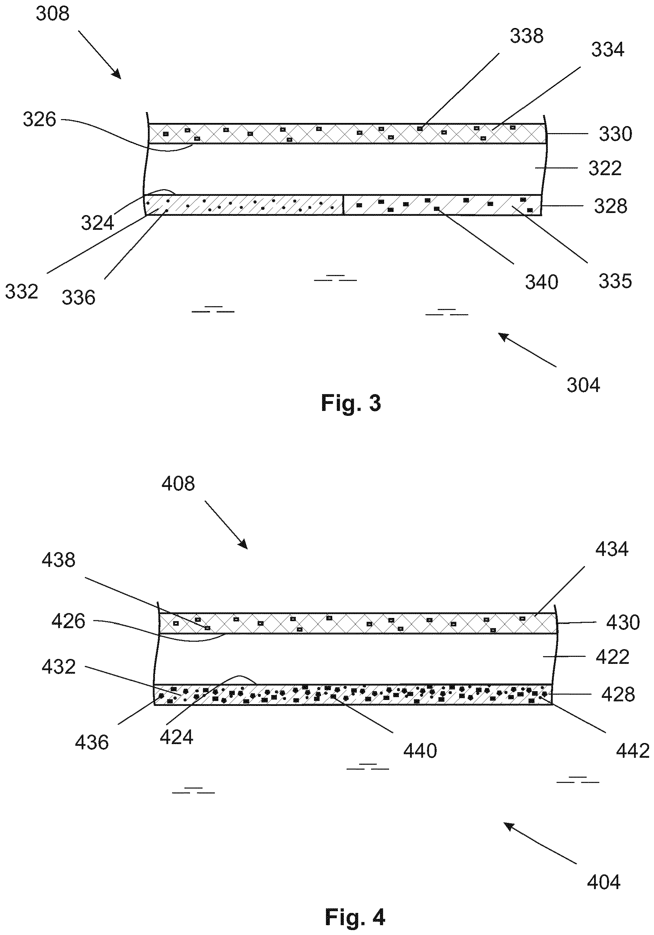

Fig. 3 shows a schematic cross sectional view of an embodiment of an optochemical sensitive element **308** for measuring the temperature and two parameters in a measurement medium. A first sensing layer **328** and a second sensing layer **330** are applied to a first surface **324** and second surface **326** of a substrate **322** respectively. The first sensing layer **328** comprises a first indicator **336** immobilized in a first polymer matrix **332** and a second indicator **340** immobilized in a third polymer matrix **335.** In a further embodiment, the first indicator **336** and the second indicator **340** are immobilized in the same polymer matrix.

The second sensing layer **330** comprises a temperature sensitive indicator **338** immobilized in a second polymer matrix **334.** The composition of the first, second and/or third polymer matrix **(332, 334, 335)** can be the same or can differ. Examples of materials suitable as polymer matrices for either of the first, second or third polymer matrices are as follows: polystyrene film, cyclic olefin copolymer ("COC") such as ethylene-norbornene copolymer, cyclic olefin polymer ("COP") or poly(n-methyl methacrylimide) (PMMI) or a combination thereof. Alternatively, the second sensing layer **330** can employ silicone polymers for its polymer matrix composition.

The first indicator **336** present in the first sensing layer **328** is sensitive to a first parameter in a measurement medium **304** and the second indicator **340** present in the third sensing layer **335** is sensitive to a second parameter in the measurement medium **304.** The temperature sensitive indicator **338** allows the measurement of the temperature in the measurement medium **304** thus allowing for temperature compensated measurements of the first and/or second parameters of interest present in the measurement medium **304.**

In a further embodiment of an optochemical sensitive element **408,** a first sensing layer **428** comprising three indicators for measuring three parameters is shown in Fig. 4. A first indicator **436,** a second indicator **440** and a third indicator **442** are immobilized in a first polymer matrix **432.** This first sensing layer **428** is applied on a first surface **424** of a substrate **422** and a second sensing layer **430** comprising a temperature sensitive indicator **438** immobilized in a second polymer matrix **434** is applied on a second surface **426** of the substrate **422.**

In principle, it is possible to determine the concentration of different parameters in a measurement medium by photoluminescence quenching so long as the indicator is sensitive in regards to the parameter of interest.

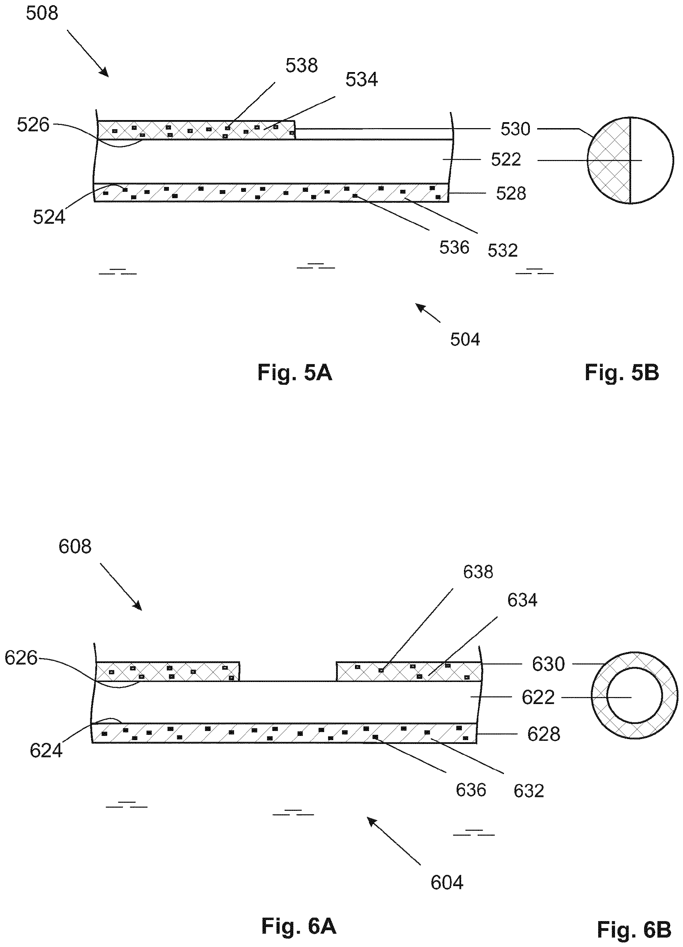

Figs. 5A and 5B show a cross sectional side view and top view respectively of an embodiment showing an arrangement of a second sensing layer **530** of an optochemical sensitive element **508.** The first sensing layer **528** is arranged on a first surface **524** of a substrate **522.** Preferably, the first sensing layer **528** covers the entire surface area of the first surface **524** of the substrate **522.** The second sensing layer **530** is arranged on a portion of a second surface **526** of the substrate **522.**

Fig. 5B provides a top view of the section of the optochemical sensitive element as shown in Fig. 5A. Preferably, the second sensing layer is arranged on half of the area of the second surface **526** of the substrate **522,** as clearly depicted in Fig. 5B.

Figs. 6A and 6B show a cross sectional side view and top view respectively of an embodiment showing an arrangement of a second sensing layer **630** of an optochemical sensitive element **608.** The second sensing layer **630** of the optochemical sensitive element **608** is arranged as a particular shape to cover a portion of a second surface **626** of a substrate **622.** Preferably, the second sensing layer **630** is arranged in the shape of an annular ring **630** on the surface **626** of the substrate **622** as can be clearly seen in Fig. 6B. The outer radius of the second sensing layer **630** is approximately equal to the outer radius of the substrate **622** such that the annular ring shaped second sensing layer **630** is arranged concentrically with the substrate **622.**

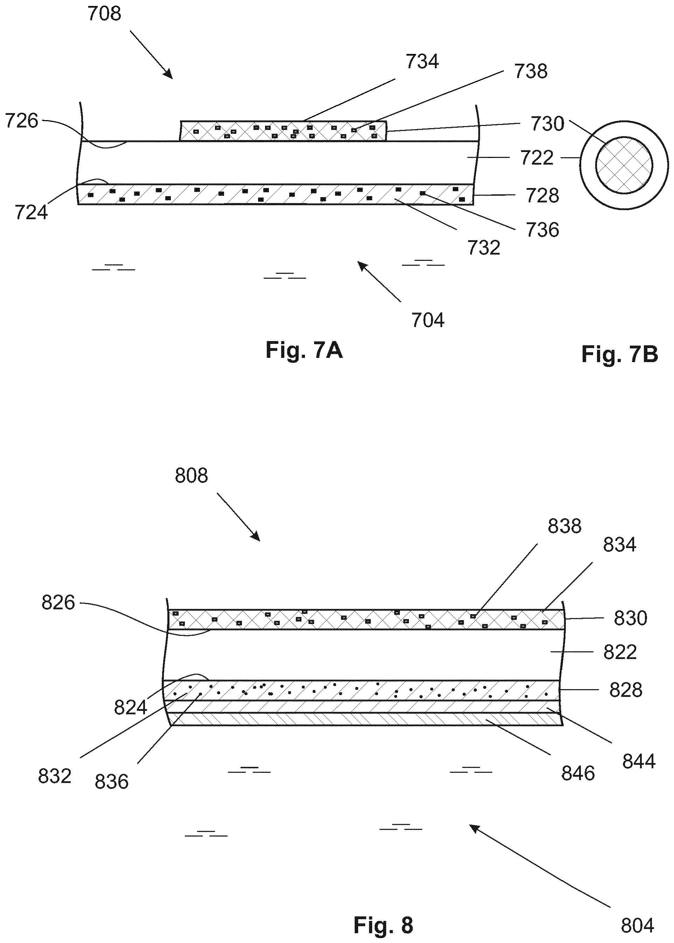

Figs. 7A and 7B show a cross sectional side view and top view respectively of an embodiment showing an arrangement of a second sensing layer **730** of an optochemical sensitive element **708.** In this embodiment, the second sensing layer **730** is arranged as having a particular shape to cover a portion of a second surface **726** of a substrate **722.** Preferably, the second sensing layer **730** is arranged in the shape of a disc **730.** Therefore, in this case the outer radius of the second sensing layer **730** is lesser than the outer radius of the substrate **722,** such that the disc shaped second sensing layer **730** is arranged concentrically with the substrate **722** as seen in Fig. 7B.

In a further embodiment, the shape of the second sensing layer **730** is from any of the following but not limited to these shapes or geometries: rectangular, hexagonal, circular, triangular, square-formed or polygonal.

The embodiments shown in Figs. 5 to 7 are advantageous because an increased amount of emitted photoluminescence can be received by a detector from the first sensing layer since only a portion of a substrate of an optochemical sensitive element is covered by the temperature sensitive second sensing layer thereby resulting in higher luminescence yields and faster response times, in particular for a first indicator present in the first sensitive layer facing the measurement medium.

In a further embodiment, an optochemical sensitive **808** element comprises at least one cover layer that is applied over a first sensing layer **828.** Fig. 8 illustrates an embodiment of the optochemical sensitive element **808** comprising at least a first cover layer **844.** The first cover layer **844** is arranged on the first sensing layer **828** and it serves as a light reflection layer. Such an arrangement is advantageous because the first cover layer **844** essentially reflects almost all excitation radiation back into the sensitive layer. This arrangement particularly helps in achieving a higher luminescence yield and provides a measuring device with shorter response times. An example of a suitable material as a light reflection layer is white silicone, preferably doped with metallic particles.

As shown in Fig. 8., the optochemical sensitive element **808** can further be covered with a second cover layer **846** that is arranged on the first cover layer **844.** In this case, the second cover layer **846** serves as a stray light protection layer and is for example a black silicone layer comprising carbon. The advantageous feature of including the stray light protection layer as the second layer is that it blocks stray light that could possibly enter from the medium and interfere with the measurement results.

The first **844** and second **846** cover layers are preferably permeable to the parameter to be measured.

The optochemical sensor according to the invention comprises a sensitive element which can be releasably housed or attached to the sensor housing. This essentially allows the optochemical sensitive element to be replaced or exchanged when a parameter sensitive indicator within the optochemical sensitive element is used up or has aged.

A method to produce an optochemical sensitive element to determine at least two parameters in a measurement medium comprising the following steps: providing a substrate having at least a first surface and at least a second surface. Further, the method involves applying a first sensitive layer on the first surface of the substrate using a first application technique wherein the first sensing layer comprises a first indicator immobilized in a first polymer matrix to determine a first parameter in the measurement medium. The method further comprises the step of applying a second sensing layer on the second surface of the substrate using a second application technique wherein the second sensing layer comprises a temperature sensitive indicator immobilized in a second polymer matrix to determine temperature of the measurement medium. The optochemical sensitive element is prepared according to the above mentioned steps such that the first sensing layer applied to the first surface of the substrate is configured to be opposite to the second sensing layer applied to the second surface of the substrate.

The first sensing layer and the second sensing layer can be applied by any one of the following application techniques of spin coating, dip coating, blade coating or screen printing. In an embodiment, the application techniques of the first and the second sensing layers are different from each other. This is particularly advantageous when different application methods are better suited to the polymer matrix comprising the suitable indicator.

In another embodiment, the first sensing layer sensitive to dissolved oxygen is applied by spin coating to the first surface of the substrate. In a further preferred embodiment, the second sensing layer comprising the temperature sensitive indicator is applied by means of blade coating to the second surface of the substrate.

In a further embodiment, the first sensing layer comprises two or more indicators that are immobilized on different polymer matrices. Each sensitive region or spot can be applied individually by any one of the application techniques over the substrate, preferably by an application technique that is well suited for forming film comprising the polymer matrix and the corresponding immobilized indicator.

The method further includes a step wherein the optochemical sensitive element is arranged in an optochemical sensor such that the first sensing layer faces the measurement medium whereas the second sensing layer faces away from the measurement medium.

### LIST OF REFERENCE NUMERALS

- 2, 202: Optochemical sensor
- 4, 204, 304, 404, 504, 604, 704, 804: Measurement medium
- 6, 206: Sensor housing
- 7: Sensor head
- 8, 208, 308, 408, 508, 608, 708, 808: Optochemical sensitive element
- 12: Light source
- 14: Detection unit
- 16: Optical elements
- 18: Light path
- 20: Control unit
- 222, 322, 422, 522, 622, 722, 822: Substrate
- 224, 324, 424, 524, 624, 724, 824: First surface
- 226, 326, 426, 526, 626, 726, 826: Second surface
- 228, 328, 428, 528, 628, 728, 828: First sensing layer
- 230, 330, 430, 530, 630, 730, 830: Second sensing layer
- 232, 332, 432, 532, 632, 732, 832: First polymer matrix
- 234, 334, 434, 534, 634, 734, 834: Second polymer matrix
- 335: Third polymer matrix
- 236, 336, 436, 536, 636, 736, 836: First indicator
- 238, 338, 438, 538, 638, 738, 838: Temperature sensitive indicator
- 340, 440: Second indicator
- 442: Third indicator
- 846: First cover layer
- 844: Second cover layer

## Claims

1. An optochemical sensor (2, 202) for determining at least two parameters, one of which is temperature, in a measurement medium (4, 204) with a sensor housing (6, 206) comprising at least one light source (12) and at least one detection unit (14); and
with an optochemical sensitive element (8, 208) arranged in a light path between the light source and detection unit, wherein the optochemical sensitive element is releasably housed in or attached to the sensor housing;
said optochemical sensitive element (8, 208, 308, ...) comprises a substrate (222, 322, ...) with a first surface (224, 324, ...) and a second surface (226, 326, ...),
at least a first sensing layer (228, 328, ...) arranged on the first surface (224, 324, ...) of the substrate (222, 322, ...),
wherein the first sensing layer (228, 328, ...) comprises a first photoluminescent indicator (236, 336, ...) immobilized in a first polymer matrix (232, 332, ...) to determine a first parameter;
and at least a second sensing layer (230, 330, ...) arranged on the second surface (226, 326, ...) of the substrate (222, 322, ...),
wherein the second sensing layer (230, 330, ...) comprises a temperature sensitive photoluminescent indicator (238, 338, ...) immobilized in a second polymer matrix (234, 334, ...) to determine the temperature of the measurement medium (4, 204, 304, ...);
wherein the substrate is optically transparent to excitation light emitted from the light source and to photoluminescent light emitted from the first indicator;
wherein the first sensing layer (228, 328, ...) arranged on the first surface (224, 324, ...) is facing the measurement medium (4, 204, 304, ...) and is opposite to the second sensing layer (230, 330, ...) arranged on the second surface (226, 326, ...) and facing away from the measurement medium (4, 204, 304, ...); and wherein in the first indicator (236, 336) differs from the temperature sensitive indicator (238, 338, ...).

2. The optochemical sensor (2, 202) according to claim 1, wherein the first parameter to be determined is a dissolved gas in the measurement medium (4, 204, 304, ...), in particular oxygen, carbon dioxide or ozone.

3. The optochemical sensor (2, 202) according to any of claims 1 or 2, wherein the first indicator (236, 336, ...) for determining oxygen and comprises at least one of the following substances or derivatives therefrom: metal-organic complex comprising polycyclic aromatic hydrocarbon, such as pyrene and/or its derivatives, oxygen sensitive transitional metal polypyridil complex in particular [Ru(bpy)₃]²⁺ or metalloporphyrin complex comprising in particular platinum or palladium.

4. The optochemical sensor (2, 202) according to any of claims 1 or 2, wherein the first indicator (236, 336, ...) for determining carbon dioxide is 8-hydroxypyrene-1,3,6-trisulfonic acid.

5. The optochemical sensor (2, 202) according to any of claims 1 to 4, wherein the temperature sensitive indicator (238, 338, ...) comprises at least one of the following substances or derivatives therefrom: rhodamine complex and/or its derivatives, temperature sensitive metal ligand complex in particular [Ru(bpy)₃]²⁺ or lanthanide-doped bulk materials, in particular doped Al₂O₃ or YAB doped with chromium ions.

6. The optochemical sensor (2, 202) according to any of claims 1 to 5, wherein the first polymer matrix (232, 323, ...) and/or the second polymer matrix (234, 324, ...) comprises at least one of the following substances: polystyrene film, cyclic olefin copolymer or poly (n-methyl methacrylimide) or a combination thereof.

7. The optochemical sensor (2, 202) according to any of claims 1 to 6, wherein the first polymer matrix (232, 323, ...) and the second polymer matrix (234, 334, ...) are different in composition.

8. The optochemical sensor (2, 202) according to any of claims 1 to 7, wherein the first sensing layer (330, 430) comprises a second indicator (340, 440) to determine a second parameter in the measurement medium (304, 404) wherein the second parameter is any of pH or a second dissolved gas.

9. The optochemical sensor (2, 202) according to any of claims 1 to 8, wherein the substrate (222, 322, ...) comprises a material selected from the group consisting of glass, polyester, amorphous or partially crystalline polyamide, acrylate, polycarbonate, ethylene-norbornene copolymer (cyclic olefin copolymer) or a combinations thereof.

10. The optochemical sensor (2, 202) according to any of claims 1 to 9, wherein the first sensing layer (228, 428, 528, ...) is configured to cover the first surface (224, 424, 524, ...) of the substrate (222, 422, 522, ...).

11. The optochemical sensor (2, 202) according to any of claims 1 to 9, wherein the second sensing layer (530, 630, 730) is configured to cover at least a portion of the second surface (526, 626, 726) of the substrate (522, 622, 722).

12. The optochemical sensor (2, 202) according to claim 11, wherein the second sensing layer (530, 630, 730) is configured to be arranged on the second surface (526, 626, 726) of the substrate (522, 622, 726) as any of the following shapes: a disc or an annular ring.

13. A method of using an optochemical sensitive element (8) for determining at least two parameters, one of which is temperature, in a measurement medium, comprising the provision of an optochemical sensor according to any one of claims 1 - 12, wherein the optochemical sensitive element comprised therein is produced comprising the following steps:
i. Providing the optically transparent substrate (222, 322, ...) having a first surface (224, 324, ...) and a second surface (226, 326, ...)
ii. Applying the first sensing layer (228, 328, ...) on the first surface (224, 324, ...) using a first application technique, wherein the first sensing layer (228, 328, ...) comprises the first photoluminescent indicator (236, 336, ...) immobilized in the first polymer matrix (232, 332, ...) to determine a first parameter in the measurement medium (4, 204, 304, ...);
iii. Applying the second sensing layer (230, 330, ...) on the second surface (226, 326, ...) using a second application technique, wherein the second sensing layer comprises the temperature sensitive photoluminescent indicator (238, 338, ...) immobilized in the second polymer matrix (234, 334, ...) to determine the temperature of the measurement medium (4, 204, 304, ...);
wherein the first sensing layer (228, 328, ...) applied to the first surface (224, 324, ...) of the substrate (222, 322, ...) is configured to be facing the measurement medium and to be opposite to the second sensing layer (230, 330, ...) applied to the second surface (226, 326, ...) of the substrate (222, 322, ...); and wherein the first indicator (236, 336) differs from the temperature sensitive indicator (238, 338, ...).

14. Method of using an optochemical sensitive element (8, 208, 308, ...) according to claim 13, wherein the first and/or second application technique is chosen from any of the following: spin coating, blade coating, dip coating or screen printing.

## Patentansprüche

1. Optochemischer Sensor (2, 202) zum Bestimmen wenigstens zweier Parameter, von denen einer die Temperatur ist, in einem Messmedium (4, 204)
mit einem Sensorgehäuse (6, 206), das wenigstens eine Lichtquelle (12) und wenigstens eine Detektionseinheit (14) umfasst; und
mit einem optochemischen sensitiven Element (8, 208), das in einem Strahlengang zwischen der Lichtquelle und der Detektionseinheit angeordnet ist, wobei das optochemische sensitive Element lösbar in dem Sensorgehäuse untergebracht oder daran angebracht ist;
wobei das optochemische sensitive Element (8, 208, 308, ...) umfasst:
ein Substrat (222, 322, ...) mit einer ersten Oberfläche (224, 324, ...) und einer zweiten Oberfläche (226, 326, ...),
wenigstens eine erste Erfassungsschicht (228, 328, ...), die auf der ersten Oberfläche (224, 324, ...) des Substrats (222, 322, ...) angeordnet ist,
wobei die erste Erfassungsschicht (228, 328, ...) einen ersten photolumineszierenden Indikator (236, 336, ...), der in einer ersten Polymermatrix (232, 332, ...) immobilisiert ist, zum Bestimmen eines ersten Parameters umfasst;
und wenigstens eine zweite Erfassungsschicht (230, 330, ...), die auf der zweiten Oberfläche (226, 326) des Substrats (222, 322, ...) angeordnet ist,
wobei die zweite Erfassungsschicht (230, 330, ...) einen temperaturempfindlichen photolumineszierenden Indikator (238, 338), der in einer zweiten Polymermatrix (234, 334, ...) immobilisiert ist, zum Bestimmen der Temperatur des Messmediums (4, 204, 304, ...) umfasst;
wobei das Substrat bei von der Lichtquelle emittiertem Anregungslicht und bei von dem ersten Indikator emittiertem photolumineszierendem Licht optisch transparent ist;
wobei die auf der ersten Oberfläche (224, 324, ...) angeordnete erste Erfassungsschicht (228, 328, ...) dem Messmedium (4, 204, 304, ...) zugewandt ist und der zweiten Erfassungsschicht (230, 330, ...), die auf der zweiten Oberfläche (226, 326, ...) angeordnet ist und dem Messmedium (4, 204, 304, ...) abgewandt ist, gegenüberliegt; und wobei sich der erste Indikator (236, 336) von dem temperaturempfindlichen Indikator (238, 338, ...) unterscheidet.

2. Optochemischer Sensor (2, 202) nach Anspruch 1, wobei es sich bei dem zu bestimmenden ersten Parameter um ein in dem Messmedium gelöstes Gas (4, 204, 304, ...), insbesondere Sauerstoff, Kohlenstoffdioxid oder Ozon, handelt.

3. Optochemischer Sensor (2, 202) nach einem der Ansprüche 1 oder 2, wobei der erste Indikator (236, 336, ...) zum Bestimmen des Sauerstoffgehalts zumindest eine der folgenden Substanzen oder Derivate davon umfasst: einen metallorganischen Komplex, umfassend polycyclischen aromatischen Kohlenwasserstoff wie Pyrol und/oder seine Derivate, einen sauerstoffempfindlichen Übergangsmetall-Polypyridil-Komplex, insbesondere [Ru(bpy)₃]²⁺, oder einen Metallporphyrin-Komplex, umfassend insbesondere Platin oder Palladium.

4. Optochemischer Sensor (2, 202) nach einem der Ansprüche 1 oder 2, wobei es sich bei dem ersten Indikator (236, 336, ...) zum Bestimmen des Kohlenstoffdioxidgehalts um 8-Hydroxypyrol-1,3,6-trisulfonsäure handelt.

5. Optochemischer Sensor (2, 202) nach einem der Ansprüche 1 bis 4, wobei der temperaturempfindliche Indikator (238, 338, ...) zumindest eine der folgenden Substanzen oder Derivate davon umfasst: einen Rhodamin-Komplex und/oder seine Derivate, einen temperaturempfindlichen Metall-Ligand-Komplex, insbesondere [Ru(bpy)₃]²⁺, oder Lanthanid-dotierten Grobstoff, insbesondere dotiertes Al₂O₃, oder mit Chromionen dotiertes YAB.

6. Optochemischer Sensor (2, 202) nach einem der Ansprüche 1 bis 5, wobei die erste Polymermatrix (232, 323, ...) und/oder die zweite Polymermatrix (234, 324, ...) wenigstens eine der folgenden Substanzen umfasst: Polystyrolfilm, Cycloolefin-Copolymer oder Poly(N-methylmethacrylimid) oder eine Kombination daraus.

7. Optochemischer Sensor (2, 202) nach einem der Ansprüche 1 bis 6, wobei sich die erste Polymermatrix (232, 323, ...) und die zweite Polymermatrix (234, 334, ...) in ihrer Zusammensetzungen unterscheiden.

8. Optochemischer Sensor (2, 202) nach einem der Ansprüche 1 bis 7, wobei die erste Erfassungsschicht (330, 430) einen zweiten Indikator (340, 440) zum Bestimmen eines zweiten Parameters in dem Messmedium (304, 404) umfasst, wobei es sich bei dem zweiten Parameter um ein beliebiges von pH-Wert oder einem zweiten gelösten Gas handelt.

9. Optochemischer Sensor (2, 202) nach einem der Ansprüche 1 bis 8, wobei das Substrat (222, 322) ein Material umfasst, das aus der Gruppe ausgewählt ist, die aus Glas, Polyester, amorphem oder teilkristallinem Polyamid, Acrylat, Polycarbonat, Ethylen-Norbornen-Copolymer (Cycloolefin-Copolymer) oder einer Kombination daraus besteht.

10. Optochemischer Sensor (2, 202) nach einem der Ansprüche 1 bis 9, wobei die erste Erfassungsschicht (228, 428, 528, ...) derart ausgelegt ist, dass sie die erste Oberfläche (224, 424, 524, ...) des Substrats (222, 422, 522, ...) bedeckt.

11. Optochemischer Sensor (2, 202) nach einem der Ansprüche 1 bis 9, wobei die zweite Erfassungsschicht (530, 630, 730) derart ausgelegt ist, dass sie zumindest einen Abschnitt der zweiten Oberfläche (526, 626, 726) des Substrats (522, 622, 722) bedeckt.

12. Optochemischer Sensor (2, 202) nach Anspruch 11, wobei die zweite Erfassungsschicht (530, 630, 730) derart ausgelegt ist, dass sie auf der zweiten Oberfläche (526, 626, 726) des Substrats (522, 622, 726) als eine der folgenden Formen angeordnet ist: eine Scheibe oder ein kreisförmiger Ring.

13. Verfahren zum Verwenden eines optochemischen sensitiven Elements (8) zum Bestimmen wenigstens zweier Parameter, von denen einer die Temperatur ist, in einem Messmedium, umfassend das Bereitstellen eines optochemischen Sensors nach einem der Ansprüche 1-12, wobei das darin umfasste optochemische sensitive Element die folgenden Schritte umfassend hergestellt wird:
i. Bereitstellen des optisch transparenten Substrats (222, 322, ...), das eine erste Oberfläche (224, 324, ...) und eine zweite Oberfläche (226, 326, ...) aufweist
ii. Aufbringen der ersten Erfassungsschicht (228, 328, ...) auf die erste Oberfläche (224, 324, ...) unter Verwendung einer ersten Aufbringungstechnik, wobei die erste Erfassungsschicht (228, 328, ...) den ersten photolumineszierenden Indikator (236, 336, ...), der in der ersten Polymermatrix (232, 332, ...) immobilisiert ist, zum Bestimmen eines ersten Parameters in dem Messmedium (4, 204, 304, ...) umfasst;
iii. Aufbringen der zweiten Erfassungsschicht (230, 330, ...) auf die zweite Oberfläche (226, 326, ...) unter Verwendung einer zweiten Anwendungstechnik, wobei die zweite Erfassungsschicht den temperaturempfindlichen photolumineszierenden Indikator (238, 338, ...), der in der zweiten Polymermatrix (234, 334, ...) immobilisiert ist, zum Bestimmen der Temperatur des Messmediums (4, 204, 304, ...) umfasst;
wobei die erste Erfassungsschicht (228, 328, ...), die auf die erste Oberfläche (224, 324, ...) des Substrats (222, 322, ...) aufgebracht wird, derart ausgelegt ist, dass sie dem Messmedium zugewandt ist und dass sie der zweiten Erfassungsschicht (230, 330, ...), die auf die zweite Oberfläche (226, 326, ...) des Substrats (222, 322, ...) aufgebracht wird, gegenüberliegt; und wobei sich der erste Indikator (236, 336) von dem temperaturempfindlichen Indikator (238, 338, ...) unterscheidet.

14. Verfahren zum Verwenden eines optochemischen sensitiven Elements (8, 208, 308, ...) nach Anspruch 13, wobei die erste und/oder zweite Aufbringungstechnik von einem beliebigen der Folgenden ausgewählt wird: Rotationsbeschichten, Rakelbeschichten, Tauchbeschichten oder Siebdruck.

## Revendications

1. Capteur optochimique (2, 202) permettant de déterminer au moins deux paramètres, dont l'un est la température, dans un milieu de mesure (4, 204)
avec un boîtier de capteur (6, 206) comprenant au moins une source de lumière (12) et à au moins une unité de détection (14) ; et
avec un élément optochimique sensible (8, 208) disposé dans un trajet de lumière entre la source de lumière et l'unité de détection, dans lequel l'élément optochimique sensible est logé de manière amovible dans le boîtier de capteur ou fixé à celui-ci ;
ledit élément optochimique sensible (8, 208, 308, ...) comprend
un substrat (222, 322, ...) avec une première surface (224, 324, ...) et une seconde surface (226, 326),
au moins une première couche de détection (228, 328, ...) disposée sur la première surface (224, 324, ...) du substrat (222, 322, ...),
dans lequel la première couche de détection (228, 328, ...) comprend un premier indicateur photoluminescent (236, 336, ...) immobilisé dans une première matrice polymère (232, 332, ...) afin de déterminer un premier paramètre ;
et au moins une seconde couche de détection (230, 330, ...) disposée sur la seconde surface (226, 326, ...) du substrat (222, 322, ...),
dans lequel la seconde couche de détection (230, 330, ...) comprend un indicateur photoluminescent sensible à la température (238, 338, ...) immobilisé dans une seconde matrice polymère (234, 334, ...) afin de déterminer la température du milieu de mesure (4, 204, 304, ...) ; dans lequel le substrat est optiquement transparent à la lumière d'excitation émise par la source de lumière et à la lumière photoluminescente émise par le premier indicateur ;
dans lequel la première couche de détection (228, 328, ...) disposée sur la première surface (224, 324, ...) fait face au milieu de mesure (4, 204, 304, ...) et est opposée à la seconde couche de détection (230, 330, ...) disposée sur la seconde surface (226, 326, ...) et est orientée à l'opposé du milieu de mesure (4, 204, 304, ...) ; et dans lequel le premier indicateur (236, 336) diffère de l'indicateur sensible à la température (238, 338, ...).

2. Capteur optochimique (2, 202) selon la revendication 1, dans lequel le premier paramètre à déterminer est un gaz dissous dans le milieu de mesure (4, 204, 304, ...), notamment l'oxygène, le dioxyde de carbone ou l'ozone.

3. Capteur optochimique (2, 202) selon l'une quelconque des revendications 1 ou 2, dans lequel le premier indicateur (236, 336, ...) permet de déterminer l'oxygène et comprend au moins l'une des substances ou l'un des dérivés suivants de celui-ci : complexe organique métallique comprenant un hydrocarbure aromatique polycyclique, tel que le pyrène et/ou ses dérivés, un complexe métallique de transition polypyridil sensible à l'oxygène notamment [Ru(bpy)₃]²⁺ ou un complexe métalloporphyrine comprenant notamment du platine ou du palladium.

4. Capteur optochimique (2, 202) selon l'une quelconque des revendications 1 ou 2, dans lequel le premier indicateur (236, 336, ...) permettant de déterminer le dioxyde de carbone est l'acide 8-hydroxypyrène-1,3,6-trisulfonique.

5. Capteur optochimique (2, 202) selon l'une quelconque des revendications 1 à 4, dans lequel l'indicateur sensible à la température (238, 338, ...) comprend au moins l'une des substances ou l'un des dérivés suivants de celui-ci : complexe rhodamine et/ou ses dérivés, complexe ligand métallique sensible à la température notamment [Ru(bpy)₃]²⁺ ou matériaux en vrac dopés au lanthanide, notamment Al₂O₃ dopé ou YAB dopé aux ions chrome.

6. Capteur optochimique (2, 202) selon l'une quelconque des revendications 1 à 5, dans lequel la première matrice polymère (232, 323, ...) et/ou la seconde matrice polymère (234, 324, ...) comprend au moins l'une des substances suivantes : film de polystyrène, copolymère d'oléfine cyclique ou poly(n-méthyl méthacrylimide) ou une combinaison de ceux-ci.

7. Capteur optochimique (2, 202) selon l'une quelconque des revendications 1 à 6, dans lequel la première matrice polymère (232, 323, ...) et la seconde matrice polymère (234, 334, ...) sont de composition différente.

8. Capteur optochimique (2, 202) selon l'une quelconque des revendications 1 à 7, dans lequel la première couche de détection (330, 430) comprend un second indicateur (340, 440) afin de déterminer un second paramètre dans le milieu de mesure (304, 404) dans lequel le second paramètre est l'un quelconque du pH ou d'un second gaz dissous.

9. Capteur optochimique (2, 202) selon l'une quelconque des revendications 1 à 8, dans lequel le substrat (222, 322, ...) comprend un matériau choisi dans le groupe constitué de verre, polyester, polyamide amorphe ou partiellement cristallin, acrylate, polycarbonate, copolymère éthylène-norbornène (copolymère d'oléfine cyclique) ou leurs combinaisons.

10. Capteur optochimique (2, 202) selon l'une quelconque des revendications 1 à 9, dans lequel la première couche de détection (228, 428, 528, ...) est configurée pour recouvrir la première surface (224, 424, 524, ...) du substrat (222, 422, 522, ...).

11. Capteur optochimique (2, 202) selon l'une quelconque des revendications 1 à 9, dans lequel la seconde couche de détection (530, 630, 730) est configurée pour recouvrir au moins une partie de la seconde surface (526, 626, 726) du substrat (522, 622, 722).

12. Capteur optochimique (2, 202) selon la revendication 11, dans lequel la seconde couche de détection (530, 630, 730) est configurée pour être disposée sur la seconde surface (526, 626, 726) du substrat (522, 622, 726) sous l'une des formes suivantes : un disque ou une bague annulaire.

13. Procédé d'utilisation d'un élément optochimique sensible (8) permettant de déterminer au moins deux paramètres, dont l'un est la température, dans un milieu de mesure, comprenant la fourniture d'un capteur optochimique selon l'une quelconque des revendications 1 à 12, dans lequel l'élément optochimique sensible qui en fait partie est produit, comprenant les étapes suivantes :
i. la fourniture du substrat optiquement transparent (222, 322, ...) ayant une première surface (224, 324, ...) et une seconde surface (226, 326, ...)
ii. l'application de la première couche de détection (228, 328, ...) sur la première surface (224, 324, ...) à l'aide d'une première technique d'application, dans lequel la première couche de détection (228, 328, ...) comprend le premier indicateur photoluminescent (236, 336, ...) immobilisé dans la première matrice polymère (232, 332, ...) afin de déterminer un premier paramètre dans le milieu de mesure (4, 204, 304, ...) ;
iii. l'application de la seconde couche de détection (230, 330, ...) sur la seconde surface (226, 326, ...) à l'aide d'une seconde technique d'application, dans lequel la seconde couche de détection comprend l'indicateur photoluminescent sensible à la température (238, 338, ...) immobilisé dans la seconde matrice polymère (234, 334, ...) afin de déterminer la température du milieu de mesure (4, 204, 304, ...) ;
dans lequel la première couche de détection (228, 328, ...) appliquée sur la première surface (224, 324, ...) du substrat (222, 322, ...) est configurée pour faire face au milieu de mesure et pour être opposée à la seconde couche de détection (230, 330, ...) appliquée sur la seconde surface (226, 326, ...) du substrat (222, 322, ...) ; et dans lequel le premier indicateur (236, 336) diffère de l'indicateur sensible à la température (238, 338, ...).

14. Procédé d'utilisation d'un élément optochimique sensible (8, 208, 308, ...) selon la revendication 13, dans lequel la première et/ou la seconde technique d'application est choisie parmi l'une des techniques suivantes : le dépôt par centrifugation, le couchage à la lame, le couchage par immersion ou la sérigraphie.
